# EUROPEAN PATENT SPECIFICATION

(11) **EP 1 073 326 B1**
(45) Date of publication and mention of the grant of the patent: **12.03.2003**
(21) Application number: 99911626.2
(22) Date of filing: 24.03.1999
(51) Int. Cl.: A01C 1/04, A01G 13/02

(54) **A MATERIAL FOR USE IN THE PREPARATION OF A SEEDBED, A METHOD OF CONTROLLING WEED BUDDING IN SEEDBEDS, AND USE OF THE MATERIAL OR THE METHOD FOR CONTROLLING WEED BUDDING**
MATERIAL ZUM PRÄPARIEREN VON SAATBEETEN, VERFAHREN ZUR KONTROLLE DES KEIMENS VON UNKRAUT IN SAATBEETEN UND GEBRAUCH DES MATERIALS ODER DES VERFAHRENS ZUM VERHINDERN DES KEIMENS VON UNKRAUT
MATERIAU POUR PREPARATION DE LIT DE SEMIS, PROCEDE EN VUE D'EVITER LA GERMINATION DE MAUVAISES HERBES DANS DES LITS DE SEMIS, ET USAGE DU MATERIAU OU DU PROCEDE EN VUE D'EVITER LA GERMINATION DES MAUVAISES HERBES

(30) Priority: 24.03.1998 DK 41198
(43) Date of publication of application: 07.02.2001
(73) Proprietor: Nielsen, Carsten Holmgard, 8520 Lystrup (DK)
(72) Inventor: Nielsen, Carsten Holmgard, 8520 Lystrup (DK)
(74) Representative: Nielsen, Leif
(86) International application number: DK9900173
(87) International publication number: WO99048350

(56) References cited:
- EP-A1- 0 097 735
- EP-A1- 0 125 997
- DE-C- 522 374
- FR-A1- 2 505 607
- FR-A1- 2 534 444
- US-A- 2 571 491
- US-A- 2 812 618

## Description

The invention concerns a material for use in preparing a seedbed with the purpose of growing crops, where the material comprise a strip arranged for laying down below the surface level of the seedbed, which strip at least in some areas is able to be grown through by plants. In addition, the invention concerns methods for controlling weed germination in seedbeds as indicated in claim 10.

By growing in rows, it is known to lay out plastic, straw or the like on the ground between the rows, and it is also known to keep the area between the rows free from weeds with a hoe. In both cases, no control of the weeds in the area adjacent to the cultivated plants in the row will occur, and the weeds will grow up here together with the cultivated plants.

It is also known to lay plastic out foil on the ground, to perforate openings the foil, and to sow the seeds of cultivated plants in the soil therethrough. In this case, the opening in the foil will be so large that weed seeds around the seed of cultivated plants can germinate up through the opening together with the cultivated plant.

It is known to plant out plants in root-penetrable pots filled with a growing medium which is free from weed seeds. Here weed seeds in the surrounding soil may also be able to germinate through the sides of the pot which do not reject sprouts, and the upper rim of the pot is always placed in level with the surface of the bed.

It is known to lay out a weed-free material, it may be sand, over the seeds of cultivated plants. The purpose of this, though, is to ensure a good germination of the seed of cultivated plants and not to keep weed from germinating. This weed-free material is spread over a wide area and is spread independently of the placing of the seeds of cultivated plants.

US-A-2812618 describes a doublewalled tape where seeds are placed between the two tape walls at regular intervals along with insecticides and fertilisers. The doublewalled tape is open at the bottom in order for the roots to be able to grow freely.

There is therefore a need for a material that may be used for establishing a seedbed ensuring that the area in the immediate vicinity of the cultivated plants is free from weed plants.

This is achieved with a material as indicated in the characterising clause of claim 1.

With the material according to the invention it is achieved that the weeds only can make sprouts outside the layers of material being able not to be grown through, and therefore the area close to the sprout of the cultivated plants will be free from weeds. The material can be arranged so that it suitably can receive plant seeds or small plants before the laying out, where these in a usual way are attached to the strip or are laid down hereon after the laying out. There may suitably be a narrow opening in the strip wherethrough the cultivated plant can be connected with the surrounding soil. The material may thus be arranged for initial reception of seed from cultivated plants in connection with or after the laying out of the material, and in this connection it will be suitable if longitudinally of the strip there is an opening wherethrough the roots of the cultivated plant is connected with the surrounding soil. The opening can be constituted by paper or other material, e.g. a net which do not block the growing through thereof by the roots.

At the surface, the layers of material not capable to be grown through may extend upward from the surface or extend along the surface to each side of the seedbed. In the latter case, the material may suitably be opaque for sunlight, whereby it is ensured that weed sprout is not supplied with light and therefore cannot grow in the area close to the cultivated plants.

The furrow can, as indicated in claim 2, be quite narrow, and the two layers of material are then arranged to lie side by side vertically in the bed from the strip and up to the surface.

In another embodiment according to claim 3, the strip is arranged to be laid down in a U-shaped furrow so that the bottom of the furrow is formed by the strip and the sides hereof by the layer of material not capable of being grown through. The furrow can be wide, and for forming a weed-free area around the cultivated plants and securing the remaining of the material in the furrow, the area over the strip and between the layers of material not being able to be grown through then have to be filled out with a material not containing weed seeds, whereby the strip will lie in a level under the surface of the bed. The sides of the furrow can be parallel or slope to each their side so that the furrow gets a more V-shaped cross-section.

With the invention it thus becomes possible to grow crops in rows without the use of chemicals and without use of manual workpower for removing the weed in the rows.

As indicated in claim 3, the material can be arranged for receiving plant seeds or small plants evenly distributed along the strip and a growing medium which is free from weed seeds before, during, or after the laying down.

For achieving a simple and handy unit, the two layers of material not being able to be grown through are fastened to each their rim of the strip as indicated in claim 5.

As indicated in claim 4, the two layers of material not being able to be grown through can suitably comprise sheet shaped material. It may be paper or plastic, and if a stiff material is selected, it becomes possible to let the sheet shaped material extend upward for the surface of the seedbed after the laying out as indicated in claim 5. This gives the advantage that it becomes possible to perform weed control outside the sheet shaped material, as well as the advantage that between the two upright, sheet shaped material sides there will be a favourable microclimate. The weed control outside the upright sheet shaped material may be with chemical means or physically with heat or light.

In an embodiment according to claim 6, the two layers of material not being able to be grown through comprise liquid substances at the laying out which harden after the laying out and form a layer of material not being able to be grown through.

As indicated in claim 7, together with the seeds of cultivated plants there may be provided one or more of the following substances: hygroscopic material, micro-organisms or substances increasing germination, fertilizing agents, substances inhibiting pests. By irrigating before, after, or simultaneously with the laying down of the strip, it may hereby be ensured that there is a certain water supply for the seed of cultivated plants to use of during germination and that the conditions in other respects are favourable for the germinating cultivated plant.

A suitable material for the strip is, as indicated in claim 8, water soluble paper. This is able to be grown through by the roots of the seed of the cultivated plant and it is furthermore degradable in the soil.

In an embodiment according to claim 9, the strip is constituted by a glue layer between the two layers of material not being able to be grown through. This embodiment is especially interesting if the material layers lie closely together and the furrow is narrow and without filling material. Her seeds of cultivated plants may be inserted in the glue layer, and by the use of a suitable water soluble glue the seed is supplied with moisture after the planting out, and it will be able to germinate.

The method according to the invention is specified in claim 10. When seeds of cultivated plants or small plant are placed on the strip, this will be like a conventional plant strip, but the establishment along the strip of the layers not being able to be grown through and the filling up of the area between these layers of material with a growing medium being free from weed seeds gives the possibility of the seed of cultivated plants or the plant can grow without it being necessary to weed out right around it.

Suitable embodiments of the method of the invention are indicated in claims 12 and 13.

By conventional cultivation in argilliferous soil, if the soil is very wet and the sun dries the soil hard with a lot of heat, the soil will form a very hard crust after sowing so that the seed of cultivated plants cannot sprout to the surface. By the methods according to the invention, either the seed of cultivated plants is not covered by soil, or the soil covering the seed of cultivated plants is controlled, and thereby this potential yield reducing factor is eliminated.

By conventional cultivation, where crop sprays for weed killing are used, it is not suitable to cover the seedbed with clear plastic, as the plastic in such a case has to be removed by each spraying. This problem is avoided by the methods according to the invention as no weed is present between the cultivated plants and therefore the need for spraying in the row is non-existing. The plastic covering may therefore remain untouched until it is to be taken off of consideration to the continual growth of the cultivated plants.

The invention also concerns the use of a method or material according to one or more of the claims 1 - 13, where in addition there is established a covering with clear plastic of the area around and over the cultivated plants.

Hereby a number of further advantages are achieved:
- the plant rows are prevented from being covered by drifting as a consequence of sand or soil drifting by the wind,
- there is established a favourable microclimate under the plastic covering which may extend the growing season,
- the covering can prevent pest attack against the tender seedlings and later against the slightly larger plants.

Experiments show that the covering results in an increased yield of up to 10% which makes the covering a good investment in many cultures. The use of the invention together with covering can profitably be combined with other usual techniques for establishing a favourable microclimate around the germinating cultivated plants, e.g. forming of a crest or groove structure giving further shelter for the cultivated plants.

In the following examples of the invention are gone through with reference to the Figures, where:
- Fig. 1: shows a section through an embodiment of the invention,
- Fig. 2: a section through another embodiment where the layers of material not able to be grown through extend upward from the surface of the bed,
- Fig. 3: another embodiment not falling under the scope of the claimed invention, and
- Fig. 4: an embodiment not falling under the scope of the claimed invention where the furrow is narrow and closes together about the two layers of material not able to he grown through, and
- Fig. 5: shows another embodiment not falling under the scope of the claimed invention where the two layers of material not able to be grown through extend to both sides of the strip under the ground

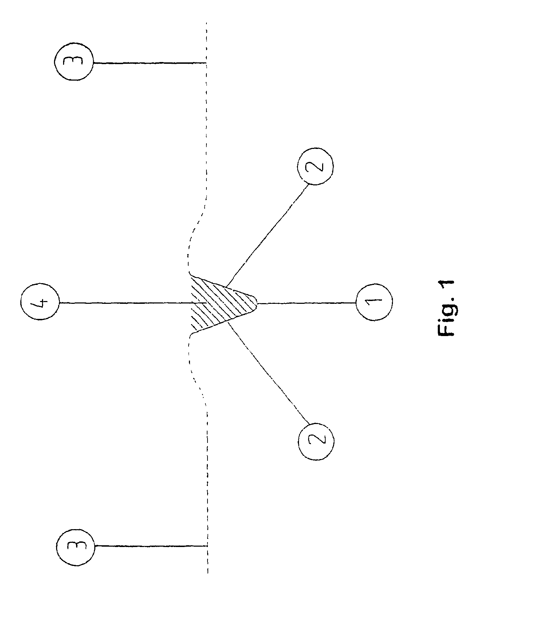

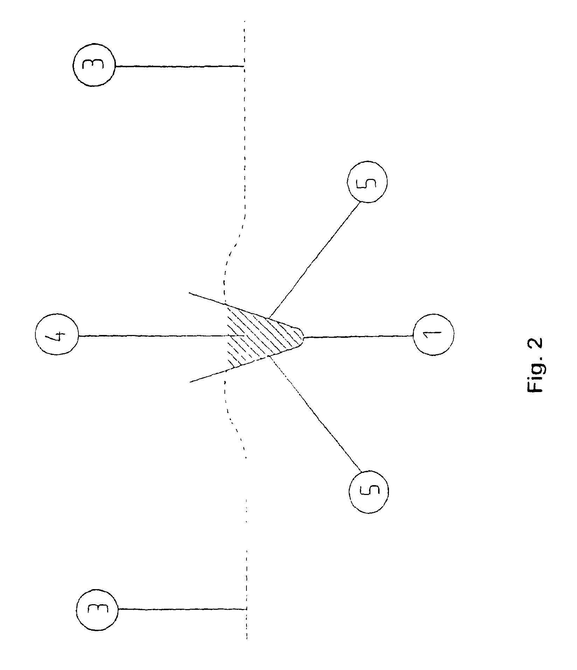

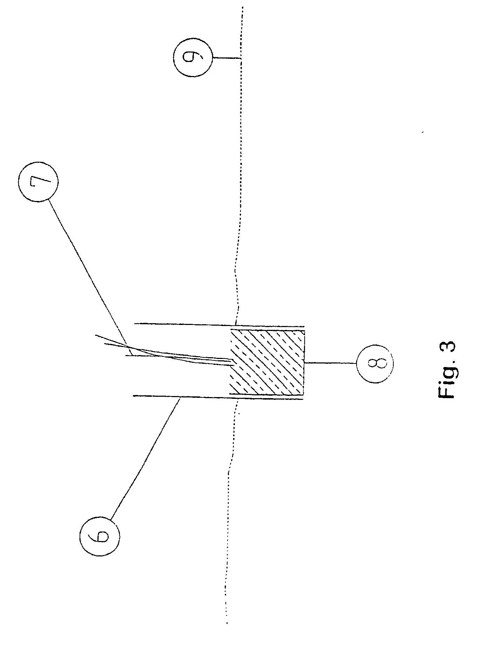

Fig. 1 shows a U-shaped furrow filled up with a growing medium 4 which is free from weed seeds. In the bottom of the furrow there is a strip 1 which is capable of being grown through by plant roots at least in some areas, and along the side walls of the furrow there is a layer 2 of material which is not able to be grown through by plants. The material layer 2 may extend a shorter or longer distance toward each side of the furrow along the surface 3 of the bed. The seeds of cultivated plants may be fastened to the strip 1 with regular intervals opposite to areas being able to be grown through by plant roots so that the seeds are laid out together with the materials. Alternatively, the strip 1 can be without seed as these are supplied to the seedbed subsequently, simultaneously with or after the supplying of the growing medium 4. In the Figure, the strip 1 and the material 2 are shown as continuous, but these may also be discontinuous which facilitates a later taking up of the materials 2 without the strip 1 coming with. It is also possible to connect some of the parts with a water-based glue which after some time in the soil is dissolved, whereafter the parts of the material not being able to be grown through may be taken up freely. It will also depend on the kind of crop and the character of the bed in addition how far from the furrow to the sides the material layers 2 have to extend along the surface 3. Possibly the whole area between the rows is covered with the material 2. Another alternative is the material 2 only lying on the surface close to the furrow, and that the weed control between the rows takes place in a conventional way, e.g. with a hoe.

The layer of material 2 covering the surface can advantageously be treated so that it becomes undesirable for plants to grow close nearby. Thereby the possibility of weed growing through these layers is reduced.

In Fig. 2 is seen another embodiment of the invention. Here material layer 5 corresponding to the layer 2 in Fig. 1, but with a greater stiffness, is extended from the area along the sides of the furrow and up above the surface of the ground where it stands upright in extension of the wall of the furrow. Hereby there is achieved a screening of the area with the growing medium 4 being free from weed seeds, so that cultivated plants germinating or planted in the growing medium are provided a microclimate enhancing the growth. At the same time the screening will protect the cultivated plants against weed control measures performed outside of the screening of the material layer 5. Hereby it becomes possible to control the weed effectively on the surface 3 between the rows with usual chemical or physical means without the risk of damaging the cultivated plants. The surface 3 may also be covered with a suitable material for preventing germination of weed.

In Fig. 3 there is seen a further embodiment where the furrow has U-shape with a flat bottom 8 and where the layers 6 of material are disposed vertically along the walls of the furrow. Here the layers will act as screens and these may possibly be extended up in the air to a height above the leaves 7 on an established plant.

In the above mentioned embodiment it may be advantageous on sloping seedbeds that between the layers of material not being able to be grown through crosswise of the furrow, there is established further barrier layers that may assist in securing the growing medium not being flushed away in connection with strong downpours.

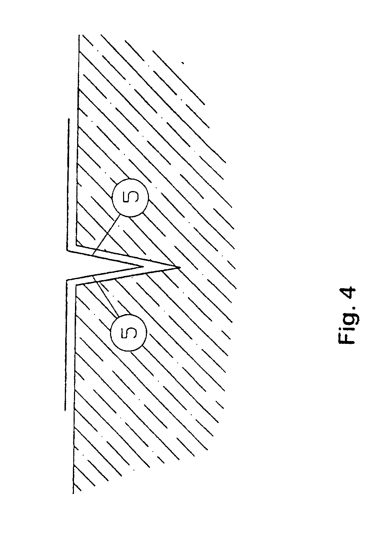

In Fig. 4 there is seen another embodiment where the furrow is quite narrow and where the material layers 5 as a consequence lie adjacent to each other. The seeds of cultivated plants are provided at the lower end of the layers, and from here roots coming from the seed may reach the surrounding soil, while the sprout can move up to the surface of the bed between the two material layers 5. Here none or only very few sprouts may find their way to the surface through the squeezed opening between the layers 5.

At each side of the narrow furrow, the material layers 5 extend a certain distance away from the furrow over the surface of the seedbed, and hereby germination of weed is prevented in this area. Even the material used in the layers 5 may be a degradable material which is decomposed in time during a growing season, or it may be usual and substantially cheaper plastic foil which cannot be decomposed and has to be taken up after the growing season. Such a foil can possibly be reusable.

In the above mentioned embodiment, the material layer under the ground may suitably be moisture absorbing so that moisture is carried to the seed of cultivated plants in the soil between the layers 5.

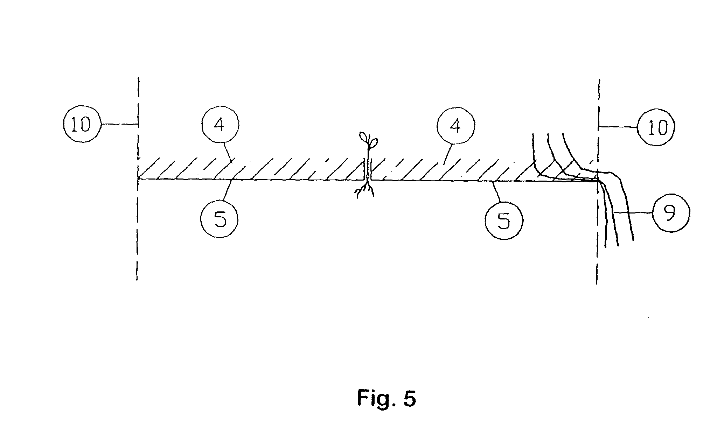

The form of the seedbed in Fig. 5 is special as the layers 5 of material not being able to be grown through here has a layer of soil over them at each side of the furrow.

Weed plants 9 sprouting root shoots into this area will get these cut off at the stippled line 10 when hoeing and are thereby exterminated, and the weed plants possibly germinating in the soil layer over the material cannot get the roots down into the underlying soil and will therefore have difficulty in developing. The layer of soil can, for example, have a thickness of 2.5 - 5 cm. According to Fig. 5 there is a central slot between two layers of material extending on to the surface, but it is also imaginable that the material layers 5 in the soil continue across the seedbed and only have a row of central holes or openings above which the seed of cultivated plants is disposed.

In connection with the above mentioned embodiments it is possible to cover the area over the seedbed with a clear plastic in order thereby to protect the cultivated plant and to give an improved microclimate. If e.g. the U- or V-shaped furrow is not completely filled up with growing medium, the transparent plastic can lie flatly over the furrow thereby appearing. Another possibility that may be used at the upright parts of the layers of material not being able to be grown through is to let the plastic be extended over these. Alternatively, choosing a common plastic covering with brackets which together with the plastic foil form small greenhouses which may ensure a substantial extension of the growing season. It is thus within the scope of the invention to establish this plastic covering simultaneously with the laying out of the material layers not being able to be grown through.

By establishing a seedbed, the furrow is formed at first and the strip is laid down. If the strip is connected with the material layers not being able to be grown through, these are provided in the same stage, or else this takes place in a subsequent or preceding step. If it is open, the furrow is hereafter filled up completely or partly with a growing medium being free from weed seeds, alternatively the furrow is closed with pressure on both sides thereof without supplying any growing medium. If seeds or plants are connected with the strip, the seedbed has been established. If not, seeds or plants have to be provided with the growing medium subsequently, alternatively the growing medium is supplied together with seeds or plants.

With the material and the method according to the invention, a number of new possibilities for strengthening the cultivated plants are attained. Thus the strip itself may carry nutrients that are released during the growth of the plant. The material can also be impregnated with colour, scent agents, or other chemical substances assisting to keep pests and fungi away.

Another possibility is that the material contains tracers making it possible by means of a censor to localize the placing of the material in the soil, which may be advantageous in the case where the material is arranged to be taken up after use. If magnets or areas containing conductors like metals are embedded in the material under or on the surface, this could form basis for the localisation by a censor thereof, and thereby it becomes possible to control a tool, e.g. a hoe, in the rows of cultivated plants.

The laying out may suitably be mechanized whereby there is used a machine comprising means for creating a furrow, means for laying out and placing of material, and means for establishing a shape for securing the material.

Experiments have shown that up to 50% fewer weed seeds can germinate if they are not subjected to light in a shorter or longer period, something which otherwise typically happens at the sowing where the soil is tilled. It will thus be a great advantage if the areas of the machine tilling the soil are covered so that no light comes to the weed seeds during the sowing. Alternatively, the sowing can be performed at night where weed seeds are not subjected to light by the tilling of the soil. If simultaneously there is used a material according to the invention for covering the area around the seedbed which is opaque for sunlight, the weed seeds coming up to the surface during the tilling of the soil will not subsequently be subjected to sunlight, and it is ensured that they will not receive nourishment through sunlight and therefore cannot grow.

## Claims

1. A material for use in preparing a seedbed with the purpose of growing crops, where the material comprises two layers (2;5) of material not being able to be grown through **characterised in that** a strip (1) for laying down below the surface level of the seedbed and which at least in some areas is able to be grown through by plants is fastened to said two layers of material and that said two layers (2;5) of material not being able to be grown through extend along and from said strip (1).

2. A material according to claim 1, **characterised in that** the strip is arranged to form the bottom in a U-shaped furrow, where the two layers (2;5) of material not being able to be grown through are arranged to form the sides in the furrow.

3. A material according to claim 2, **characterised in that** before, during, or after the laying down, the strip (1) is arranged for receiving plant seeds or small plants evenly distributed along the strip and a growing medium (4) which is free from weed seeds for wholly or partly filling up the U-shaped furrow.

4. A material according to claim 1, **characterised in that** the two layers (5;6) of material not being able to be grown through comprises a sheet shaped material.

5. A material according to claim 2, **characterised in that** the sheet shaped material (5;6) is relatively stiff and extends upward from the surface level of the seedbed after the laying out.

6. A material according to claims 1-5, **characterised in that** at the laying out, the two layers (2;5) of material not being able to be grown through comprise liquid substances which harden after the laying out and form a layer of material not being able to be grown through.

7. A material according to claims 1 - 6, **characterised in that** the strip comprises one or more of the following substances: hygroscopic material, micro-organisms or substances increasing germination, fertilizing agents, substances inhibiting pests.

8. A material according to claim 1 - 7, **characterised in that** the strip comprises water-soluble paper.

9. A material according to claims 2 - 8, **characterised in that** a glue layer between the two layers of material not being able to be grown through forms the strip.

10. A method for controlling weed germination in seedbeds, **characterised in that** plant seeds or small plants are provided on a strip (1) being able to be grown through by plants, whereafter the strip is placed under the surface level of the seedbed, where before, during, or after the laying down of the strip along the two sides of the strip there is established two layers (2;5;6) of material not being able to be grown through extending from the strip and to over the surface level of the seedbed, where the area above the strip (1) and between the layers (2;5;6) of material not being able to be grown through is filled up with a growing medium (4) being free from weed seeds.

11. A method according to claim 10, **characterised in that** said two layers are arranged to extend from both sides of the strip (1) and the area above the strip (1) and between the layers (2;5) of material not being able to be grown through is filled up with a growth medium (4) being free from weed seeds or is covered by a layer of soil where seeds of cultivated plants or small plants are placed in a row at the strip (1).

12. A method according to claim 10 or 11, **characterised in that** the two layers (5;6) of material not being able to be grown through at the placing of the strip under the surface level of the seedbed will extend upward over the surface level of the seedbed for protecting the crop against weed inhibiting measures externally of the two layers (5;6) of material not being able to be grown through.

13. A method according to claim 10 or 11, **characterised in that** the two layers of material not being able to be grown through at the placing of the strip under the surface level of the seedbed will extend along the surface level (3) of the seedbed for preventing germination of weed close to the row of crops.

14. Use of a method according to one or more of claims 10-13 or material according to one or more of the preceding claims 1-9 where in addition there is established a covering with clear plastic of the area around and over the cultivated plants.

## Patentansprüche

1. Material zur Verwendung bei der Herstellung eines Saatbettes zum Aufziehen von Feldfrüchten, wobei das Material zwei Materialschichten (2;5) umfasst, die nicht durchwachsen werden können, **dadurch gekennzeichnet, dass** ein Streifen (1) zum Unterlegen unterhalb des Oberflächenniveaus des Saatbettes, der mindestens in einigen Bereichen von Pflanzen durchwachsen werden kann, mit diesen beiden Materialschichten verbunden wird und dass die beiden Materialschichten (2;5), die nicht durchwachsen werden können, sich von diesem Streifen (1) aus fortsetzen.

2. Material gemäß Anspruch 1, **dadurch gekennzeichnet, dass** der Streifen so angeordnet ist, dass er den Boden einer U-förmigen Furche bildet, wo die beiden Materialschichten (2;5), die nicht durchwachsen werden können, so angeordnet sind, dass sie die Seitenteile der Furche bilden.

3. Material nach Anspruch 2, **dadurch gekennzeichnet, dass** vor, während oder nach dem Unterlegen der Streifen (1) zur Aufnahme von Pflanzensamen oder kleinen Pflanzen arrangiert wird, die entlang des Streifens verteilt sind und eine Wachstumsmedium (4), das frei von Unkrautsamen ist, zum vollständigen oder teilweisen Auffiillen der U-förmigen Furche verwendet wird.

4. Material gemäß Anspruch 1, **dadurch gekennzeichnet, dass** die beiden Materialschichten (5;6), die nicht durchwachsen werden können, ein blattförmiges Material umfassen.

5. Material gemäß Anspruch 2, **dadurch gekennzeichnet, dass** das blattförmige Material (5;6) relativ steif ist und sich nach dem Auslegen von dem Oberflächenniveau des Saatbetts aus nach oben ausbreitet.

6. Material gemäß mindestens einem der Ansprüche 1 bis 5, **dadurch gekennzeichnet, dass** die beiden Materialschichten (2;5), die nicht durchwachsen werden können, flüssige Substanzen umfassen, die nach dem Auslegen erhärten und eine Materialschicht bilden, die nicht durchwachsen werden kann.

7. Material gemäß mindestens einem der Ansprüche 1 bis 6, **dadurch gekennzeichnet, dass** der Streifen eine oder mehrere der folgenden Substanzen umfasst: hygroskopisches Material, Mikroorganismen oder Substanzen, die die Keimbildung fördern, Düngemittel, Substanzen zur Schädlingsbekämpfung.

8. Material gemäß mindestens einem der Ansprüche 1 bis 7, **dadurch gekennzeichnet, dass** der Streifen wasserlösliches Papier umfasst.

9. Material gemäß mindestens einem der Ansprüche 2 bis 8, **dadurch gekennzeichnet, dass** eine Kleberschicht zwischen den beiden Materialschichten, die nicht durchwachsen werden können, den Streifen bilden.

10. Verfahren zur Kontrolle des Keimens von Unkraut in Samenbetten, **dadurch gekennzeichnet, dass** die Pflanzensamen oder die kleinen Pflanzen auf einen Streifen (1) bereitgestellt werden, der von den Pflanzen durchwachsen werden kann, woraufhin der Streifen unter das Oberflächenniveau des Samenbettes platziert wird, wo vor, während oder nach dem Unterlegen des Streifens entlang der beiden Seiten des Streifens zwei Materialschichten (2;5;6) etabliert werden, die nicht durchwachsen werden können, und die sich von dem Streifen aus bis oberhalb des Oberflächenniveaus des Pflanzenbettes erstrecken, wobei der Bereich oberhalb des Streifens (1) und zwischen den Materialschichten (2;5;6), die nicht durchwachsen werden können, mit einem Wachstumsmedium (4) aufgefüllt wird, das frei von Unkrautsamen ist.

11. Verfahren gemäß Anspruch 10, **dadurch gekennzeichnet, dass** die beiden Schichten so ausgelegt sind, dass sie sich von beiden Seiten des Streifens (1) aus erstrecken und der Bereich oberhalb des Streifens (1) und zwischen den Materialschichten (2;5), die nicht durchwachsen werden können, mit einem Wachstumsmittel (4) aufgefüllt wird, das frei von Unkrautsamen ist oder von einer Schicht von Erde abgedeckt wird, in der Samen von kultivierten Pflanzen oder kleine Pflanzen entlang des Streifens (1) aufgereiht platziert werden.

12. Verfahren gemäß Anspruch 10 oder 11, **dadurch gekennzeichnet, dass** die beiden Materialschichten (5;6), die nicht durchwachsen werden können, beim Platzieren des Streifens unterhalb des Oberflächenniveaus des Samenbettes sich nach oben über das Oberflächenniveau des Samenbettes ausdehnen, um die Feldfrüchte gegen die Maßnahmen zur Inhibierung von Unkraut außerhalb der beiden Materialschichten (5;6), die nicht durchwachsen werden können, zu schützen.

13. Verfahren gemäß Anspruch 10 oder 11, **dadurch gekennzeichnet, dass** sich die beiden Materialschichten, die nicht durchwachsen werden können, beim Platzieren des Streifens unterhalb des Oberflächenniveaus des Samenbettes entlang des Oberflächenniveaus (3) des Samenbettes erstrecken, um ein Keimen von Unkraut in der Nähe der Reihe der Feldfrüchte zu verhindern.

14. Verwendung des Verfahrens gemäß mindestens einem der Ansprüche 10 bis 13 oder des Materials gemäß mindestens einem der vorhergehenden Ansprüche 1 bis 9, wobei zusätzlich eine Abdeckung des Bereiches um und über den kultivierten Pflanzen aus klarem Plastik vorgesehen ist.

## Revendications

1. Matière destinée à être utilisée dans la préparation d'un lit de semis avec l'objectif de faire croître des cultures, dans laquelle la matière comprend deux couches (2 ; 5) de matière ne pouvant pas être cultivées, **caractérisée en ce qu'**une bande (1) destinée à être étalée sous la surface du lit de semis et qui est susceptible d'être cultivée, au moins dans certaines zones, est fixée auxdites deux couches de matière et **en ce que** lesdites deux couches (2 ; 5) de matière ne pouvant pas être cultivées, s'étendent le long et à partir de ladite bande (1).

2. Matière selon la revendication 1, **caractérisée en ce que** la bande est disposée pour former la base d'un sillon en forme de U, dans lequel les deux couches (2 ; 5) de matière ne pouvant pas être cultivées, sont disposées pour former les côtés dans le sillon.

3. Matière selon la revendication 2, **caractérisée en ce que** avant, pendant ou après l'étalement, la bande (1) est disposée pour recevoir des graines de plantes ou de petites plantes uniformément étalées le long de la bande et un moyen de croissance (4) qui ne comporte pas de graines de mauvaises herbes pour remplir tout ou partie du sillon en forme de U.

4. Matière selon la revendication 1, **caractérisée en ce que** les deux couches (5 ; 6) de matière ne pouvant pas être cultivées, comprennent une matière en forme de feuille.

5. Matière selon la revendication 2, **caractérisée en ce que** la matière en forme de feuille (5 ; 6) est relativement raide et s'étend vers le haut de la surface du lit de culture après la pose.

6. Matière selon les revendications 1 à 5, **caractérisée en ce qu'**au moment de la pose, les deux couches (2 ; 5) de matière ne pouvant pas être cultivées, comprennent des substances liquides qui durcissent après la pose et forment une couche de matière ne pouvant pas être cultivées.

7. Matière selon les revendications 1 à 6, **caractérisée en ce que** la bande comprend une ou plusieurs des substances suivantes : substances hygroscopiques, microorganismes ou substances accroissant la germination, agents fertilisants, substances empêchant l'apparition d'insectes nuisibles.

8. Matière selon les revendications 1 à 7, **caractérisée en ce que** la bande comprend du papier soluble dans l'eau.

9. Matière selon les revendications 2 à 8, **caractérisée en ce qu'**une couche de colle située entre les deux couches de matière ne pouvant pas être cultivées, forme la bande.

10. Procédé de contrôle de la germination des graines dans des lits de semis, **caractérisé en ce que** les graines de plantes ou de petites plantes sont fournies sur une bande (1) à travers laquelle des graines de plantes ou de petites plantes sont susceptibles de pousser, d'après laquelle la bande est placée sous la surface du lit de semis, où avant, pendant, ou après l'étalement de la bande le long des deux côtés de la bande, deux couches (2 ; 5 ; 6) de matière ne pouvant pas être cultivées, sont établies, s'étendant de la bande et au-dessus de la surface du lit de semis, où la zone située au-dessus de la bande (1) et entre les couches (2 ; 5 ; 6) de matière ne pouvant pas être cultivées, est remplie avec le milieu de croissance (4) ne comportant pas de graines de mauvaises herbes.

11. Procédé selon la revendication 10, **caractérisé en ce que** lesdites deux couches sont disposées pour s'étendre des deux côtés de la bande (1) et **en ce que** la zone située au-dessus de la bande (1) et entre les couches (2 ; 5) de matière ne pouvant pas être cultivées, est remplie avec le milieu de croissance (4) ne comportant pas de graines de mauvaises herbes ou est couverte d'une couche de terre dans laquelle des graines de plantes cultivées ou de petites plantes sont placées en rangée sur la bande (1).

12. Procédé selon la revendication 10 ou 11, **caractérisé en ce que** les deux couches (5 ; 6) de matière ne pouvant pas être cultivées à l'endroit de la mise en place de la bande sous la surface du lit de semis s'étendront vers le haut au-dessus du niveau de la surface du lit de semis pour protéger la culture contre un traitement pour les mauvaises herbes à l'intérieur des deux couches (5 ; 6) de matière ne pouvant pas être cultivées.

13. Procédé selon la revendication 10 ou 11, **caractérisé en ce que** les deux couches de matière ne pouvant pas être cultivées à l'endroit de la mise en place de la bande sous le niveau de la surface du lit de culture, s'étendront le long du niveau de la surface (3) du lit de semis pour empêcher la germination de mauvaises herbes à proximité de la rangée des cultures.

14. Utilisation d'un procédé selon une ou plusieurs des revendications 10 à 13 ou de matière selon une ou plusieurs des revendications précédentes 1 à 9, où il est réalisé en outre une couverture en matière plastique transparente de la zone autour et au-dessus des plantes cultivées.
